# FASCICULE DE BREVET EUROPEEN

(11) **EP 2 043 775 B1**
(45) Date de publication et mention de la délivrance du brevet: **22.08.2018**
(21) Numéro de dépôt: 07823582.7
(22) Date de dépôt: 13.07.2007
(51) Int. Cl.: B01J 20/18

(54) **ADSORBANTS ZEOLITIQUES AGGLOMERES, LEUR PROCEDE DE PREPARATION ET LEURS UTILISATIONS**
AGGLOMERIERTE ZEOLITISCHE ADSORPTIONSMITTEL, VERFAHREN ZU DEREN HERSTELLUNG UND IHRE VERWENDUNGEN
AGGLOMERATED ZEOLITIC ADSORBENTS, THEIR METHOD OF PREPARATION AND THEIR USES

(30) Priorité: 19.07.2006 FR 0653033; 13.11.2006 US 858630 P
(43) Date de publication de la demande: 08.04.2009
(73) Titulaire: ARKEMA FRANCE, 92700 Colombes (FR); IFP Energies nouvelles, 92500 Rueil-Malmaison (FR)
(72) Inventeur: BOUVIER, Ludivine, F-64140 Billere (FR); KIEGER, Stéphane, 78500 Sartrouville (FR); LAROCHE, Catherine, 69390 Vernaison (FR); LEFLAIVE, Philibert, 69780 Mions (FR); PLEE, Dominique, 64140 Lons (FR)
(74) Mandataire: Neugebauer, Jürgen
(86) Numéro de dépôt international: PCT/FR2007/051661
(87) Numéro de publication internationale: WO 2008/009845

(56) Documents cités:
- EP-A2- 0 323 893
- EP-B1- 1 105 213
- WO-A-00/50166
- WO-A-2005/061100
- CN-A- 1 565 718
- FR-A1- 2 767 524
- D.M. RUTHVEN: "Principles of Adsorption and Adsorption Processes" 1984, A- WILEY-INTERSCIENCE PUBLICATION, JOHN WILEY & SONS , USA , XP002425279 cité dans la demande page 243 page 327 page 329

## Description

### DOMAINE TECHNIQUE

L'invention concerne des adsorbants zéolitiques agglomérés à base de zéolite X à petits cristaux échangée au baryum ou à base de zéolite X à petits cristaux échangée au baryum et au potassium.

Ces adsorbants peuvent être utilisés plus particulièrement pour la production de paraxylène très pur à partir d'une charge d'hydrocarbures aromatiques contenant des isomères à 8 atomes de carbone.

### TECHNIQUE ANTERIEURE

L'utilisation d'adsorbants zéolitiques constitués de zéolites X ou Y échangées avec des ions tels que baryum, potassium ou strontium, seuls ou en mélange, pour adsorber sélectivement le paraxylène dans un mélange d'hydrocarbures aromatiques est bien connue de l'art antérieur.

US 3.558.730; US 3.558.732; US 3.626.020; US 3.663.638 montrent que des adsorbants comprenant des aluminosilicates échangés par du baryum et du potassium ou par du baryum seul (US 3.960.774) sont efficaces pour la séparation du paraxylène d'une coupe en C8 aromatiques.

Un mode de préparation de ces adsorbants est par exemple décrit dans US 3.878.127 et consiste à traiter dans la soude à chaud des agglomérés (zéolite X +liant) de rapport Na₂O/Al₂O₃ strictement inférieur à 0,7 afin de remplacer les cations échangeables de la zéolite (tels que protons ou cations du Groupe IIA) par du sodium préalablement à un échange baryum ou (baryum+potassium), l'échange préalable au sodium permettant à une plus grande quantité d'ions baryum ou (baryum+ potassium) d'être ajoutés à la structure zéolitique.

Ces adsorbants sont utilisés comme agents d'adsorption dans les procédés en phase liquide, de préférence de type contre-courant simulé similaires à ceux décrits dans US 2.985.589 qui s'appliquent entre autres aux coupes aromatiques en C8 (coupe comprenant des hydrocarbures aromatiques à 8 atomes de carbone).

Dans les références listées ci-dessus, les adsorbants zéolitiques se présentent sous forme de poudre ou sous forme d'agglomérés constitués majoritairement de zéolite et jusqu'à 15 à 20 % en poids de liant inerte.

La synthèse des zéolites X s'effectuant le plus souvent par nucléation et cristallisation de gels de silicoaluminates, on obtient des poudres dont l'emploi à l'échelle industrielle est particulièrement malaisé (pertes de charges importantes lors des manipulations) et l'on préfère les formes agglomérées sous forme de granulés ou de grains qui ne présentent pas les inconvénients inhérents aux matières pulvérulentes.

Ces agglomérés, qu'ils soient sous forme de plaquettes, de billes ou d'extrudés, sont en général constitués d'une poudre de zéolite, qui constitue l'élément actif (au sens de l'adsorption) et d'un liant destiné à assurer la cohésion des cristaux sous forme de grains et de conférer aux grains une résistance mécanique suffisante pour résister aux vibrations et aux mouvements auxquels ils sont soumis au cours de leur mise en oeuvre.

La préparation de ces agglomérés s'opère par exemple par empâtage de poudre de zéolite avec une pâte argileuse, dans des proportions de l'ordre de 80 à 85 % en poids de poudre de zéolite pour 20 à 15 % en poids de liant, puis mise en forme en billes, plaquettes ou extrudés, et traitement thermique à haute température pour cuisson de l'argile et réactivation de la zéolite, l'échange au baryum pouvant être effectué avant et/ou après l'agglomération de la zéolite pulvérulente avec le liant.

On obtient des corps zéolitiques dont la granulométrie est de quelques millimètres, et qui, si le choix du liant et la granulation sont faits dans les règles de l'art, présentent un ensemble de propriétés satisfaisantes, en particulier de porosité, de résistance mécanique, de résistance à l'abrasion. Cependant, les propriétés d'adsorption de ces agglomérés sont évidemment réduites par rapport à la poudre active de départ de par la présence de liant d'agglomération inerte.

Divers moyens ont été proposés pour pallier cet inconvénient du liant d'être inerte quant aux performances adsorbantes, parmi lesquels, la transformation du liant, pour tout ou partie, en zéolite ou zéolitisation. Pour effectuer facilement cette opération, on utilise des liants zéolitisables appartenant à la famille de la kaolinite, préalablement calcinés à des températures comprises entre 500°C et 700°C.

Une variante consiste à mouler des grains de kaolin puis à zéolitiser le kaolin ; le principe en est exposé dans « ZEOLITE MOLECULAR SIEVES" de D.W. BRECK, John Wiley and Sons, NEW YORK, p 320 et suivantes ». Cette technologie a été appliquée avec succès à l'obtention de grains de zéolite A ou de zéolite X, constitués jusqu'à 95 % en poids de la zéolite elle-même et d'un résiduel de liant non transformé (voir par exemple US 3.119.660 où on constate que l'obtention de zéolite X nécessite l'ajout d'une source de silice dans le milieu réactionnel).

Dans US 4.818.508 sont préparés des agglomérés à base de zéolite A, X ou Y par digestion de préformes d'argile réactive (obtenue par traitement thermique d'argile non-réactive - telle que halloysite ou kaolinite- dont au moins 50 % en poids se présente sous forme de particules de granulométrie comprise entre 1,5 et 15 µm), de préférence en présence d'agent porogène et avec un oxyde de métal alcalin. Les exemples relatifs à la synthèse d'agglomérés à base de zéolite X montrent là aussi qu'il est nécessaire d'ajouter une source de silice, ce qui n'est pas le cas pour préparer des agglomérés à base de zéolite A. Cependant, ce procédé ne permet pas a priori de contrôler la taille des cristaux de zéolite formés après digestion de l'argile réactive.

JP 05163015 enseigne que l'on peut former des grains de zéolite X à rapport Si/Al faible, inférieur à 1,25, en mélangeant une poudre de zéolite LSX de rapport Si/Al inférieur à 1,25 avec du kaolin, de la potasse, de la soude et de la carboxyméthylcellulose suivi d'une mise en forme par extrusion. Les grains ainsi obtenus sont séchés, calcinés à 600°C pendant 2 heures puis immergés dans une solution de soude et de potasse à 400°C pendant 2 jours.

Néanmoins, les procédés associés décrits dans les brevets précédents sont lourds et pèchent, soit par la durée excessive de réaction, soit par le nombre important d'étapes mises en jeu. Selon les inventeurs, on peut, en outre, craindre que le traitement thermique tel que décrit et revendiqué dans JP 05163015, après l'étape de mise en forme, ne contribue à l'amorphisation des grains et que la digestion caustique qui suit ait pour objet de les recristalliser, ce qui expliquerait la lenteur du procédé.

FR 2.789.914 décrit un procédé de fabrication d'agglomérés de zéolite X de rapport Si/AI tel que 1,15 < Si/Al ≤ 1,5 échangés au baryum et éventuellement au potassium, en agglomérant de la poudre de zéolite X avec un liant, une source de silice et de la carboxyméthylcellulose et en zéolitisant ensuite le liant par immersion de l'aggloméré dans une liqueur alcaline. Après échange des ions de la zéolite par des ions baryum (et potassium) et activation, les agglomérés ainsi obtenus présentent des propriétés d'adsorption du paraxylène contenu dans les coupes aromatiques améliorées par rapport à des adsorbants préparés à partir de la même quantité de zéolite X et de liant mais dont le liant n'est pas zéolitisé.

Outre de bonnes propriétés de sélectivité vis-à-vis de l'espèce à séparer du mélange réactionnel, l'adsorbant doit présenter de bonnes propriétés de transfert de matière afin de garantir un nombre de plateaux suffisants pour réaliser une séparation efficace des espèces en mélange, comme l'indique RUTHVEN dans l'ouvrage intitulé «Principles of Adsorption and Adsorption Processes» («Principes de l'Adsorption et des procédés d'adsorption») pages 326 et 407. RUTHVEN indique page 243, que, dans le cas d'un adsorbant aggloméré, le transfert de matière global dépend de l'addition de la résistance diffusionnelle intra-cristalline et de la résistance diffusionnelle entre les cristaux. La résistance diffusionnelle intra-cristalline est proportionnelle au carré des rayons des cristaux et inversement proportionnelle à la diffusivité des molécules intracristalline). La résistance diffusionnelle entre les cristaux (également appelée résistance macroporeuse) est quant à elle proportionnelle au carré des rayons des agglomérés et inversement proportionnelle à la diffusivité des molécules dans les macropores. Pour une structure zéolitique, une taille d'aggloméré et une température de fonctionnement données, les diffusivités sont fixées et le seul moyen d'améliorer le transfert de matière consiste à réduire le diamètre des cristaux. Un gain sur le transfert global sera donc obtenu en réduisant la taille des cristaux.

Pour estimer cette amélioration de la cinétique de transfert, on peut utiliser la théorie des plateaux décrite par RUTHVEN dans «Principles of Adsorption and Adsorption processes » chapitre 8, pages 248-250. Cette approche est basée sur la représentation d'une colonne par un nombre fini de réacteurs hypothétiques idéalement agités (étages théoriques). La hauteur équivalente de plateau théorique est une mesure directe de la dispersion axiale et de la résistance au transfert de matière du système.

Dans le cas particulier de la purification des gaz, l'art antérieur (EP 1.105.213) a reconnu qu'une diminution de la taille des cristaux augmentait la capacité d'adsorption en fonctionnement dynamique et diminuait la résistance à la diffusion intra-cristalline. EP 1.105.213 décrit à cet effet un procédé de fabrication de tamis moléculaire pour l'élimination de CO₂. Ce tamis moléculaire est formé en agglomérant une poudre de faujasite X à bas rapport Si/AI (LSX) dont plus de 97% des sites cationiques sont occupés par des ions sodium avec un liant inerte, un peptisant et un agent porogène. Entre autre, plus de 80 % de ladite poudre LSX doit être constituée de cristaux compris entre 1 et 2 µm afin d'améliorer la capacité d'adsorption en dynamique du CO₂ et de diminuer la résistance au transfert intra-cristallin. Le document CN1565718 décrit un adsorbant zéolithique aggloméré à base de cristaux de zéolite X ayant une taille de particules comprise entre 0.1 et 0.4 µm. Une troisième propriété de l'adsorbant nécessaire pour garantir de bonnes performances du procédé de séparation en phase liquide de type contre-courant simulé est d'avoir une bonne résistance mécanique. En effet, en condition standard de fonctionnement de ce type de procédé, une contrainte mécanique s'applique sur l'adsorbant au sein des unités, entraînant la formation de fines, qui induisent une détérioration des performances ("Primary analysis on state of xylene adsorption unit", Li et al., Jingxi Shiyou Huagong, 2004, (4), 54-55), et ce d'autant plus que la résistance mécanique de l'adsorbant sera faible.

La résistance mécanique des adsorbants est caractérisée à l'aide d'un appareil "BCS Tester" commercialisé par la société Vinci Technologies selon la méthode (fournie avec le dispositif) Shell série SMS1471-74 (Shell Method Series SMS1471-74 "Determination of BULK CRUSHING STRENGTH OF CATALYSTS". Compression-Sieve Method) qui permet de déterminer la résistance à l'écrasement d'un lit de solides (billes ou extrudés de longueur inférieure ou égale à 6 mm).

Il est connu que les adsorbants zéolitiques agglomérés à base de zéolite X échangée au baryum ou (baryum + potassium) présentent de bonnes propriétés d'adsorption des xylènes, une bonne sélectivité du p-xylène dans un mélange de C8 aromatiques en phase liquide.

Il est également connu que les petits cristaux de zéolite apportent en général un meilleur transfert de matière que les cristaux de la même zéolite de granulométrie supérieure, notamment du fait du transfert de matière amélioré.

L'homme du métier s'attend donc à ce que des adsorbants zéolitiques agglomérés à base de zéolite X à petits cristaux et échangés au baryum ou (baryum + potassium) présentent de bonnes propriétés d'adsorption du p-xylène, une bonne sélectivité et un bon transfert de matière et s'attend donc à ce que de tels adsorbants présentent de bonnes performances initiales de séparation du paraxylène contenu dans un mélange de C8 aromatiques dans un procédé en phase liquide, par exemple de type contre-courant simulé .

Or les inventeurs ont constaté que des adsorbants zéolitiques à base de zéolite X à petits cristaux agglomérés avec un liant de manière classique n'ont pas une bonne résistance mécanique et que leur performances de séparation des isomères aromatiques en C8 et notamment des xylènes se dégradent au cours du temps, et ce d'autant plus vite que la taille des cristaux de zéolite X est faible.

### EXPOSE DE L'INVENTION

La présente invention a pour objet des adsorbants zéolitiques aux propriétés améliorées pour la séparation du paraxylène d'un mélange d'aromatiques en C8 tout en remédiant à un problème de perte de résistance mécanique. Les adsorbants zéolitiques agglomérés présentent de bonnes propriétés de sélectivité vis-à-vis du paraxylène, de transfert de matière et de résistance mécanique et sont particulièrement adaptés pour une utilisation dans un procédé de séparation du paraxylène en phase liquide, de préférence de type contre-courant simulé.

Les adsorbants zéolitiques agglomérés selon la présente invention comprennent :
des cristaux de zéolite X de diamètre inférieur ou égal à 1,7 µm, de préférence allant de 0,1 à 1,7 µm et avantageusement allant de 0,1 à 1,6 µm, de rapport atomique Si/Al tel que 1,15< Si/Al ≤1,5, de préférence allant de 1,2 à 1,3, échangée à au moins 90 % par des ions baryum seuls soit par des ions baryum et des ions potassium, les sites échangeables occupés par le potassium pouvant représenter jusqu'à 1/3 des sites échangeables occupés par les ions baryum+potassium (le complément éventuel étant généralement assuré par des ions alcalins ou alcalino-terreux autres que le baryum et le potassium)
et du liant inerte,
   et sont caractérisés en ce que leur volume de Dubinin mesuré par adsorption d'azote à 77°K après dégazage sous vide à 300°C pendant 16 heures est supérieur ou égal à 0,245 cm³/g, de préférence supérieur ou égal à 0,250 cm³/g et avantageusement supérieur ou égal à 0,253 cm³/g et leur résistance mécanique mesurée à l'aide d'un appareil "BCS Tester" commercialisé par la société Vinci Technologies selon la méthode Shell série SMS1471-74 adaptée pour les agglomérés zéolitiques de taille inférieure à 1,6 mm est supérieure ou égale à 2 MPa.

L'invention concerne également un procédé de préparation des agglomérés selon l'invention qui comprend les étapes suivantes :
- a/ agglomération de poudre de zéolite X de diamètre inférieur ou égal à 1,7 µm, de préférence allant de 0,1 à 1,7 µm et avantageusement allant de 0,6 à 1,6 µm, avec un liant contenant au moins 80 % en poids d'argile zéolitisable et éventuellement une source de silice, et mise en forme, puis séchage et calcination et,
- b/ zéolitisation du liant par action d'une solution alcaline basique,
- c/ remplacement d'au moins 90 % des sites échangeables de la zéolite X par du baryum, suivi du lavage et du séchage du produit ainsi traité,
- d/ éventuellement remplacement d'au plus 33 % des sites échangeables de la zéolite X par du potassium, suivi du lavage et du séchage du produit ainsi traité,
- e/ activation.

La taille des cristaux de zéolite X utilisées à l'étape a/ et des cristaux de zéolite X contenue dans les agglomérés est mesurée par observation au microscope électronique à balayage (MEB).

L'observation au MEB permet également de confirmer la présence de liant inerte au sein des agglomérés.

Les cristaux de zéolite X de diamètre inférieur à 1,7 µm mis en oeuvre dans le cadre de la présente invention sont considérés comme des petits cristaux ; les cristaux de zéolite X commerciaux les plus usuels présentant un diamètre en général supérieur à 2 µm.

L'agglomération et la mise en forme (étape a/) peuvent être réalisées selon toutes les techniques connues de l'homme de l'art, telles qu'extrusion, compactage, agglomération. Les proportions de liant et de zéolite mises en oeuvre sont typiquement celles de l'art antérieur, c'est-à-dire de 5 à 99 parties en poids de liant pour 95 à 1 parties en poids de zéolite. Les agglomérés issus de l'étape a/, qu'ils soient sous forme de billes, d'extrudés ont en général un diamètre moyen en nombre allant de 0,4 à 2 mm, et en particulier entre 0,4 et 0,8 mm.

Dans le présent document, on emploie l'appellation « diamètre moyen en nombre » ou bien « taille » pour les cristaux de zéolite et pour les agglomérés zéolitiques. La précision est de l'ordre de 3 %.

A l'issue de l'étape a/, les particules d'agglomérés les plus fines peuvent être éliminées par cyclonage et/ou tamisage et/ou les particules trop grosses par tamisage et/ou concassage, dans le cas d'extrudés, par exemple.

Le liant d'agglomération mis en oeuvre à l'étape a/ contient au moins 80 % en poids d'argile zéolitisable et peut également contenir d'autres liants minéraux tels que bentonite, attapulgite. Par argile zéolitisable, on entend une argile ou un mélange d'argiles qui sont susceptibles de se transformer en matière zéolitique par action d'une solution basique alcaline. L'argile zéolitisable appartient en général à la famille des kaolins, kaolinites, nacrites, dickites, halloysite et/ou métakaolins. Le kaolin est couramment utilisé.

La poudre de zéolite X mise en oeuvre à l'étape a/ peut être issue de la synthèse de cristaux de zéolite X échangée sodium, appelée également zéolite NaX ou 13 X mais on ne sortirait pas du cadre de l'invention en utilisant une poudre ayant subi un ou plusieurs échanges cationiques, entre la synthèse sous forme Na X et sa mise en oeuvre à l'étape a/.

La source éventuelle de silice peut être de la silice colloïdale, du silicate, des diatomées, de la perlite, des cendres de calcination (fly ash en anglais), du sable, ou tout autre type de silice solide.

Lors de l'étape a/, outre la poudre de zéolite X et le liant, des additifs peuvent également être mis en oeuvre, par exemple des additifs destinés à faciliter l'agglomération ou à améliorer le durcissement des agglomérés formés.

La calcination qui suit le séchage, est menée à une température en général comprise entre 500 et 600°C.

Grâce à l'étape b/ de zéolitisation, on obtient la transformation, d'au moins 50 % du liant inerte zéolitisable en matière zéolitique ; on constate que la zéolitisation a notamment pour but de renforcer la résistance mécanique des adsorbants zéolitiques agglomérés. La zéolitisation peut être pratiquée par immersion de l'aggloméré dans une solution basique alcaline, en général aqueuse, par exemple une solution aqueuse de soude et/ou de potasse dont la concentration est de préférence supérieure à 0,5 M. Elle s'opère de préférence à chaud (température supérieure à la température ambiante) typiquement à des températures de l'ordre de 80-100°C, afin d'améliorer la cinétique du processus et de réduire les durées d'immersion à moins de 8 heures mais on ne sortirait pas du cadre de l'invention en opérant à des températures plus basses et des durées d'immersion plus longues. Selon ce mode opératoire, on obtient aisément la zéolitisation (i-e la transformation du liant inerte au sens de l'adsorption en matière active au sens de l'adsorption) d'au moins 50 % en poids du liant. On procède ensuite à un lavage à l'eau suivi d'un séchage.

L'étape c/ d'échange au baryum des cations de la zéolite s'effectue par mise en contact des agglomérés issus de l'étape b/ (ou d/) avec un sel de baryum, tel que BaCl₂, en solution aqueuse à une température comprise entre la température ambiante et 100°C, et de préférence comprise entre 80 et 100°C. Pour obtenir rapidement un taux d'échange en baryum élevé, i-e supérieur à 90 %, on préfère opérer avec un large excès de baryum par rapport aux cations de la zéolite que l'on souhaite échanger, typiquement tel que le rapport BaO/Al₂O₃ soit de l'ordre de 10 à 12 en procédant par échanges successifs de façon à atteindre le taux d'échange visé minimum d'au moins 90 % et de préférence d'au moins 95 %. Dans tout le texte les taux d'échange sont calculés en équivalent et non en molarité.

L'échange éventuel au potassium (étape d/) peut être pratiqué avant et/ou après l'échange au baryum (étape c/) et/ou de manière simultanée en utilisant une solution contenant les ions baryum et potassium. Comme indiqué précédemment, il est également possible d'agglomérer à l'étape a/ de la poudre de zéolite X contenant déjà des ions potassium (pré-échange de la zéolite Na X par des ions potassium avant l'étape a/) et s'affranchir (ou non) de l'étape d/.

L'activation (étape e/), dernière étape du procédé d'obtention des adsorbants selon l'invention, a pour but de fixer la teneur en eau, ainsi que la perte au feu de l'adsorbant dans des limites optimales. On procède en général par activation thermique qu'on exécute préférentiellement entre 200 et 300°C pendant un certain temps en fonction de la teneur en eau et de la perte au feu souhaitées, typiquement de 1 à 6 heures.

Les agglomérés issus de l'étape e/, qu'ils soient sous forme de billes, d'extrudés ont en général un diamètre moyen en nombre allant de 0,4 à 2 mm, et en particulier entre 0,4 et 0,8 mm.

L'invention concerne également les utilisations des adsorbants zéolitiques décrits ci-dessus comme agents d'adsorption susceptibles de remplacer avantageusement les agents d'adsorption décrits dans la littérature à base de zéolite X échangée au baryum ou à base de zéolite X échangée au baryum et potassium et notamment dans les utilisations listées ci-dessous :
* la séparation des isomères aromatiques en C8 et notamment des xylènes,
* la séparation de sucres,
* la séparation d'alcools polyhydriques,
* la séparation d'isomères de toluène substitué tels que nitrotoluène, diéthyltoluène, toluènediamine,
* la séparation des crésols.

L'invention concerne notamment un perfectionnement de procédé de récupération de paraxylène à partir de coupes d'isomères C8 aromatiques consistant à utiliser comme agent d'adsorption du p-xylène un adsorbant zéolitique selon l'invention mis en oeuvre dans de procédés en phase liquide mais aussi en phase gazeuse.

On peut ainsi séparer le produit désiré par chromatographie liquide d'adsorption préparative (en batch), avantageusement en lit mobile simulé, c'est-à-dire à contre-courant simulé ou à co-courant simulé, et plus particulièrement à contre-courant simulé.

Les conditions opératoires d'une unité industrielle d'adsorption de type contre- courant simulé sont en général les suivantes :
nombre de lits 6 à 30
nombre de zones au moins 4
température 100 à 250°C, de préférence 150 à 190°C
pression comprise entre la pression de bulle des xylènes à la température du procédé et 3 MPa
rapport des débits désorbant sur charge 0,7 à 2,5 (par exemple 0,9 à 1,8 pour une unité d'adsorption seule (stand alone) et 0,7 à 1,4 pour une unité d'adsorption combinée à une unité de cristallisation)
taux de recyclage de 2,5 à 12, de préférence 3,5 à 6.

On pourra se référer à l'enseignement des brevets US 2.985.589, US 5.284.992 et US 5.629.467.

Les conditions opératoires d'une unité industrielle d'adsorption à co-courant simulé sont en général les mêmes que celles fonctionnant à contre-courant simulé à l'exception du taux de recyclage qui est en général compris entre 0,8 et 7. On pourra se référer aux brevets US 4.402.832 et US 4.498.991.

Le solvant de désorption peut être un désorbant dont le point d'ébullition est inférieur à celui de la charge, tel que le toluène mais aussi un désorbant dont le point d'ébullition est supérieur à celui de la charge, tel que le paradiéthylbenzène (PDEB). La sélectivité des adsorbants selon l'invention pour l'adsorption du p-xylène contenu dans des coupes aromatiques en C8 est optimale lorsque leur perte au feu mesurée à 900°C est comprise en général entre 4,0 et 7,7 %, et de préférence entre 4,7 et 6,7 %. De l'eau et un peu de dioxyde de carbone entrent dans la perte au feu.

Une des techniques de choix pour caractériser l'adsorption de molécules en phase liquide sur un solide poreux est de réaliser un perçage. Dans son ouvrage « Principles of Adsorption and Adsorption processes » (« Principes de l'Adsorption et des procédés d'adsorption »), Ruthven définit la technique des courbes de perçage (« breakthrough curves ») comme l'étude de l'injection d'un échelon de constituants adsorbables.

La méthode Shell série SMS1471-74 (Shell Method Series SMS1471-74 "Détermination of BULK CRUSHING STRENGTH OF CATALYSTS". Compression-Sieve Method) associée à l'appareil "BCS Tester" commercialisé par la société Vinci Technologies permet de déterminer la résistance à l'écrasement d'un lit de solides est basé sur le principe suivant : un échantillon de 20 cm³ d'adsorbants agglomérés, préalablement séché à l'étuve pendant au moins 2 heures à 250°C, est placé dans un cylindre métallique de section interne connue. Une force croissante est imposée par paliers par l'intermédiaire d'un piston sur cet échantillon. Les fines obtenues aux différents paliers de pression sont séparées par tamisage et pesées. Le tamis utilisé dans la méthode Shell standard est de 425 µm ce qui doit être adapté pour les agglomérés de taille inférieure à 1,6 mm pour lesquels on utilise un tamis de 200 µm. La résistance à l'écrasement en lit est déterminée par la pression en méga Pascal (MPa) pour laquelle la quantité de fines cumulées passant à travers le tamis s'élève à 0,5% pondéral de l'échantillon. Cette valeur est obtenue en traçant sur un graphique la masse de fines obtenue en fonction de la force appliquée sur le lit d'adsorbant et en interpolant à 0,5 % massique de fines cumulées. La résistance à l'écrasement en lit est typiquement comprise entre quelques centaines de kPa et quelques dizaines de MPa et généralement comprise entre 0,3 et 3,2 MPa.

### MANIERES DE REALISER L'INVENTION

### A- Synthèse de cristaux de zéolite X de Si/Al = 1,25 ± 0,03 de diamètre 2,1 um et et de rapport Na/Al = 1

On prépare un gel de composition molaire

2,72 Na₂O - 2,8 SiO₂ - Al₂O₃ - 150 H₂O.

par mélange des réactifs : silicate de soude et aluminate de sodium et eau au moyen d'une turbine ; on laisse le gel mûrir à 35 °C pendant 20 heures et on opère une cristallisation de 4 heures à 100 °C.

Les cristaux obtenus après filtration et lavage sont identifiés par diffraction des rayons X comme des faujasites.

L'analyse chimique du solide donne un rapport Si/Al = 1,25 ± 0,03.

L'analyse de la taille des cristaux de zéolite est réalisée par microscopie électronique à balayage : leur taille moyenne est de 2,1 µm.

### B- Synthèse de cristaux de zéolite X de Si/Al = 1,25 ± 0,03 de diamètre 1,6 um et de rapport Na/Al = 1

On prépare un gel de composition molaire

3,2 Na₂O - 2,8 SiO₂ - Al₂O₃ - 130 H₂O

par mélange des réactifs : silicate de soude et aluminate de sodium et eau, au moyen d'une turbine, on laisse le gel mûrir à 35 °C pendant 20 heures et on opère une cristallisation de 4 heures à 100 °C.

Les cristaux obtenus après filtration et lavage sont identifiés par diffraction des rayons X comme faujasites.

L'analyse chimique du solide donne un rapport Si/Al = 1,25 ± 0,03.

L'analyse de la taille des cristaux de zéolite est réalisée par microscopie électronique à balayage : leur taille moyenne est de 1,6 µm.

### Exemple 1 (comparatif)

840 g (exprimés en équivalent calciné) de poudre de zéolite préparée selon le mode opératoire décrit en A, est agglomérée en la mélangeant intimement avec 160 g de kaolinite des Charentes (exprimés en équivalent calciné) avec une quantité d'eau adéquate pour assurer la mise en forme d'agglomérés par extrusion. Les extrudés sont séchés, concassés de manière à récupérer des grains dont le diamètre équivalent est égal à 0,7 mm, puis calcinés à 550°C sous courant d'azote pendant 2 h.

Ces granulés sont échangés au moyen d'une solution de chlorure de baryum 0,5 M à 95°C en 4 étapes. A chaque étape, le rapport volume de solution sur masse de solide est de 20 ml/g et l'échange est poursuivi pendant 4 heures à chaque fois. Entre chaque échange, le solide est lavé plusieurs fois de manière à le débarrasser des excédents de sel. Il est ensuite activé à une température de 250°C pendant 2 h sous courant d'azote.

Le taux d'échange en baryum est de 97 % et la perte au feu (mesurée à 900°C) est de 5,9 %. Le volume microporeux mesuré selon la méthode de Dubinin par adsorption d'azote à 77°K après dégazage sous vide à 300°C pendant 16 h est de 0,23 cm³/g.

Un test de perçage (chromatographie frontale) est ensuite réalisé sur ces adsorbants pour évaluer leur efficacité. La quantité d'adsorbant utilisée pour ce test est d'environ 81 g.

Le mode opératoire pour obtenir les courbes de perçage est le suivant :
- Remplissage de la colonne par le tamis et mise en place dans le banc de test.
- Remplissage par le solvant à température ambiante.
- Montée progressive à la température d'adsorption sous flux de solvant (5 cm³/min).
- Injection de solvant à 10 cm³/min lorsque la température d'adsorption est atteinte
- Permutation solvant/charge pour injecter la charge (10 cm³/min).
- L'injection de la charge est ensuite maintenue un temps suffisant pour atteindre l'équilibre thermodynamique.
- Collecte et analyse de l'effluent du perçage.

La pression est suffisante pour que la charge reste en phase liquide, soit 1 MPa. La température d'adsorption est de 175°C.

La composition de la charge est la suivante ;
Paraxylène : 45% poids
Métaxylène : 45% poids
Iso-octane : 10% poids (celui-ci est utilisé comme traceur pour l'estimation des volumes non-sélectifs et n'intervient pas dans la séparation)

Les résultats du perçage sont consignés dans le tableau ci-dessous :
La sélectivité du paraxylène par rapport au métaxylène est calculée par bilan matière.

| Nature du solide | PAF⁽¹⁾ à 900°C | Temp⁽²⁾ | Capacité ⁽³⁾ | Sélectivité⁽⁴⁾ α_{PX/MX} | Hauteur de plateau théorique |
|---|---|---|---|---|---|
| BaX | 5,9% | 175°C | 0,176 | 3,59 | 3,71 |

| | | | | | |
|---|---|---|---|---|---|
| (1) PAF : Perte au feu (2) Temp. : température d'adsorption (3) La capacité est exprimée en cm³ de C8-aromatiques adsorbé par gramme d'adsorbant (4) PX : paraxylène, MX : métaxylène | | | | | |

On mesure également la résistance mécanique selon la méthode présentée dans la description de l'invention. La pression nécessaire pour obtenir 0,5% de fines est de 1,80 MPa.

### Exemple 2 (comparatif)

840 g (exprimés en équivalent calciné) de poudre de zéolite NaX, préparée selon le mode opératoire décrit en B sont agglomérés en les mélangeant intimement avec 160 g de kaolin (exprimés en équivalent calciné) et la quantité d'eau adéquate pour la mise en forme des agglomérés par extrusion. Les extrudés sont séchés, concassés de manière à récupérer des grains dont le diamètre équivalent est égal à 0,7 mm, puis calcinés à 550°C sous courant d'azote pendant 2 h.

L'échange baryum est opéré dans des conditions opératoires identiques à celles de l'exemple 1 à l'exception de la concentration de la solution de BaCl₂ qui est de 0,7 M suivi d'un lavage puis d'un séchage à 80°C pendant 2 h et enfin d'une activation à 250°C pendant 2 h sous courant d'azote.

Le taux d'échange en baryum est de 97 % et la perte au feu (mesurée à 900°C) est de 5,8 %. Le volume microporeux mesuré selon la méthode de Dubinin par adsorption d'azote à 77°K après dégazage sous vide à 300°C pendant 16 h est de 0,235 cm ³/g.

Un test de perçage (chromatographie frontale) est ensuite réalisé sur ces adsorbants pour évaluer leur efficacité. La quantité d'adsorbant utilisée pour ce test est d'environ 73 g.

Le mode opératoire ainsi que la composition de la charge sont identiques à ceux de l'exemple 1.

Les résultats du perçage sont réunis dans le tableau ci-dessous :
La sélectivité du paraxylène par rapport au métaxylène est calculée par bilan matière.

| Nature du solide | PAF⁽¹⁾ à 950°C | Temp⁽²⁾ | Capacité ⁽³⁾ | Sélectivité⁽⁴⁾ α_{PX/MX} | Hauteur de plateau théorique |
|---|---|---|---|---|---|
| BaX | 5,8% | 175°C | 0,173 | 3,59 | 2,20 |

On mesure également la résistance mécanique selon la méthode présentée dans la description de l'invention. La pression nécessaire pour obtenir 0,5% de fines est de 1,65 MPa.

Par rapport aux résultats obtenus avec l'adsorbant de l'exemple 1, on constate une nette amélioration du transfert de matière, la hauteur équivalente de plateaux théorique ayant considérablement diminuée mais également que la résistance mécanique a été réduite de manière importante.

### Exemple 3 (comparatif)

Dans cet exemple, on réalise et on teste un adsorbant selon l'art antérieur (FR 2.789.914).

On agglomère une zéolite NaX de rapport Si/Al = 1,25 et de rapport Na/AI= 1, en mélangeant intimement 800 g (exprimés en équivalent calciné) de poudre de zéolite X préparée selon le mode opératoire décrit en A, 150 g de kaolin (exprimés en équivalent calciné) et 65 g de silice colloïdale vendue sous la dénomination commerciale Klebosol®30 (commercialisée antérieurement sous la dénomination Cecasol®30) (contenant 30 % en poids de SiO₂ et 0,5 % de Na₂O) avec la quantité d'eau adéquate pour opérer par extrusion. Les extrudés sont séchés, concassés de manière à récupérer des grains dont le diamètre équivalent est égal à 0,7 mm, puis calcinés à 550°C sous courant d'azote pendant 2 h.

200 g de granulés ainsi obtenus sont placés dans un réacteur en verre muni d'une double enveloppe régulée à une température de 100 ± 1 °C puis on ajoute 1,5 l d'une solution aqueuse de soude de concentration 100 g/l et on laisse le milieu réactionnel sous agitation pendant 3 h. On procède ensuite au lavage des granulés en 3 opérations successives de lavage à l'eau suivi de la vidange du réacteur. On s'assure de l'efficacité du lavage en mesurant le pH final des eaux de lavage qui est compris entre 10 et 10,5.

On procède ensuite à un échange baryum dans des conditions opératoires identiques à celles de l'exemple 2 suivi d'un lavage puis d'un séchage à 80°C pendant 2 h et enfin d'une activation à 250°C pendant 2 h sous courant d'azote. Le taux d'échange en baryum de cet adsorbant est de 95 % et sa perte au feu est de 6,0 %. Le volume microporeux mesuré selon la méthode de Dubinin par adsorption d'azote à 77°K après dégazage sous vide à 300°C pendant 16 h est de 0,25 cm ³/g.

On réalise un test de perçage (chromatographie frontale) pour évaluer l'efficacité de l'adsorbant préparé selon les conditions opératoires décrites ci-dessus. La quantité de tamis utilisée pour ces tests est d'environ 77 g.

Le mode opératoire ainsi que la composition de la charge sont identiques à ceux de l'exemple 1.

Les résultats du perçage sont consignés dans le tableau ci-dessous :
La sélectivité du paraxylène par rapport au métaxylène est calculée par bilan matière.

| Nature du solide | PAF⁽¹⁾ à 900°C | Temp⁽²⁾ | Capacité ⁽³⁾ | Sélectivité⁽⁴⁾ α_{PX/MX} | Hauteur de plateau théorique |
|---|---|---|---|---|---|
| BaX | 6,0% | 175°C | 0,199 | 3,41 | 3,45 |

La pression qu'il est nécessaire d'appliquer pour obtenir 0,5 % de fines est de 2,60 MPa.

### Exemple 3 bis (comparatif)

Dans cet exemple, on réalise et on teste un adsorbant selon l'art antérieur (Exemple 2 de FR 2.789.914 reproduit à l'identique).

On agglomère une zéolite NaX de rapport Si/Al = 1,25 et de rapport Na/AI= 1, en mélangeant intimement 800 g (exprimés en équivalent calciné) de poudre de zéolite X préparée selon le mode opératoire décrit en A, 150 g de kaolin (exprimés en équivalent calciné) et 56 g de silice colloïdale vendue sous la dénomination commerciale Klebosol®30 (commercialisée antérieurement sous la dénomination Cecasol®30) (contenant 30 % en poids de SiO₂ et 0,5 % de Na₂O) et 6 g de carboxyméthylcellulose avec la quantité d'eau adéquate pour opérer par extrusion. Les extrudés sont séchés, concassés de manière à récupérer des grains dont le diamètre équivalent est égal à 0,7 mm, puis calcinés à 550°C sous courant d'azote pendant 2 h.

200 g de granulés ainsi obtenus sont placés dans un réacteur en verre muni d'une double enveloppe régulée à une température de 100 ± 1 °C puis on ajoute 1,5 l d'une solution aqueuse de soude de concentration 100 g/l et on laisse le milieu réactionnel sous agitation pendant 3 h. On procède ensuite au lavage des granulés en 3 opérations successives de lavage à l'eau suivi de la vidange du réacteur. On s'assure de l'efficacité du lavage en mesurant le pH final des eaux de lavage qui est compris entre 10 et 10,5.

On procède ensuite à un échange baryum dans des conditions opératoires identiques à celles de l'exemple 2 suivi d'un lavage puis d'un séchage à 80°C pendant 2 h et enfin d'une activation à 250°C pendant 2 h sous courant d'azote. Le taux d'échange en baryum de cet adsorbant est de 97,4 % et sa perte au feu est de 5,2 %. Le volume microporeux mesuré selon la méthode de Dubinin par adsorption d'azote à 77°K après dégazage sous vide à 300°C pendant 16 h est de 0,244 cm ³/g.

On réalise un test de perçage (chromatographie frontale) pour évaluer l'efficacité de l'adsorbant préparé selon les conditions opératoires décrites ci-dessus. La quantité de tamis utilisée pour ces tests est d'environ 77 g.

Le mode opératoire ainsi que la composition de la charge sont identiques à ceux de l'exemple 1.

Les résultats du perçage sont consignés dans le tableau ci-dessous :
La sélectivité du paraxylène par rapport au métaxylène est calculée par bilan matière. Les résultats sont différents de ceux indiqués dans l'exemple 2 de FR 2.789.914, étant donné que la méthode de test est différente.

| Nature du solide | PAF⁽¹⁾ à 900°C | Temp⁽²⁾ | Capacité ⁽³⁾ | Sélectivité⁽⁴⁾ α_{PX/MX} | Hauteur de plateau théorique |
|---|---|---|---|---|---|
| BaX | 5,2% | 175°C | 0,194 | 3,35 | 3,89 |

La pression qu'il est nécessaire d'appliquer pour obtenir 0,5 % de fines est de 2,55 MPa.

### Exemple 4 (selon l'invention)

On mélange intimement et agglomère 800 g (exprimés en équivalent calciné) de poudre de zéolite NaX préparée selon le mode opératoire décrit en B, 150 g de kaolin (exprimés en équivalent calciné) et 65 g de silice colloïdale vendue sous la dénomination commerciale Klebosol®30 (commercialisée antérieurement sous la dénomination Cecasol®30) (contenant 30 % en poids de SiO₂ et 0,5 % de Na₂O) avec la quantité d'eau adéquate pour opérer par extrusion. Les extrudés sont séchés, concassés de manière à récupérer des grains dont le diamètre équivalent est égal à 0,7 mm, puis calcinés à 550°C sous courant d'azote pendant 2 h.

200 g de granulés ainsi obtenus sont placés dans un réacteur en verre muni d'une double enveloppe régulée à une température de 100 ± 1 °C puis on ajoute 1,5 l d'une solution aqueuse de soude de concentration 100 g/l et laisse le milieu réactionnel sous agitation pendant 3 h. On procède ensuite au lavage des granulés en 3 opérations successives de lavage à l'eau suivi de la vidange du réacteur. On s'assure de l'efficacité du lavage en mesurant le pH final des eaux de lavage qui est compris entre 10 et 10,5.

On procède ensuite à un échange baryum dans des conditions opératoires identiques à celles de l'exemple 2 suivi d'un lavage puis d'un séchage à 80°C pendant 2 h et enfin d'une activation à 250°C pendant 2 h sous courant d'azote.

Le taux d'échange en baryum de cet adsorbant est de 95% et sa perte au feu est de 6,0 %. Le volume microporeux mesuré selon la méthode de Dubinin par adsorption d'azote à 77°K après dégazage sous vide à 300°C pendant 16 h est de 0,256 cm ³/g.

Un test de perçage (chromatographie frontale) est ensuite réalisé sur ces adsorbants pour évaluer leur efficacité. La quantité d'adsorbant utilisée pour ces tests est d'environ 76 g.

Le mode opératoire ainsi que la composition de la charge sont identiques à ceux de l'exemple 1.

Les résultats du perçage sont réunis dans le tableau ci-dessous.

La sélectivité du paraxylène par rapport au métaxylène est calculée par bilan matière.

| Nature du solide | PAF⁽¹⁾ à 900°C | Temp⁽²⁾ | Capacité ⁽³⁾ | Sélectivité⁽⁴⁾ α_{PX/MX} | Hauteur de plateau théorique |
|---|---|---|---|---|---|
| BaX | 6,0% | 175°C | 0,194 | 3,33 | 2,26 |

On mesure également la résistance mécanique selon la méthode présentée dans la description de l'invention. La pression nécessaire pour obtenir 0,5 % de fines est de 2,40 MPa.

On constate que les adsorbants selon l'invention associent simultanément une sélectivité, un transfert de matière et une résistance mécanique améliorés par rapport aux adsorbants de l'art antérieur.

## Revendications

1. Adsorbants zéolitiques agglomérés à base de cristaux de zéolite X de diamètre moyen en nombre inférieur ou égal à 1,7 µm, de rapport atomique Si/Al tel que 1,15 < Si/Al ≤ 1,5, de préférence tel que 1,2 < Si/Al ≤ 1,3, dont au moins 90 % des sites cationiques échangeables sont occupés soit par des ions baryum seuls soit par des ions baryum et des ions potassium, les sites échangeables occupés par le potassium pouvant représenter jusqu'à 1/3 des sites échangeables occupés par les ions baryum et les ions potassium, et dont le complément éventuel est assuré par des ions alcalins ou alcalino-terreux autres que le baryum et le potassium, et de liant inerte, **caractérisés en ce que** le volume de Dubinin desdits adsorbants, mesuré par adsorption d'azote à 77°K après dégazage sous vide à 300°C pendant 16 h, est supérieur ou égal à 0,245 cm³/g, de préférence supérieur ou égal à 0,250 cm³/g, de préférence encore supérieur ou égal à 0,253 cm³/g, et **en ce que** la résistance mécanique mesurée par la méthode Shell série SMS1471-74 adaptée pour les agglomérés de taille inférieure à 1,6 mm est supérieure ou égale à 2 MPa.

2. Adsorbants selon la revendication 1, dont le taux global d'échange en baryum seul ou en baryum+potassium est supérieur ou égal à 95 %.

3. Adsorbants selon l'une des revendications 1 ou 2, dont la perte au feu mesurée à 900 °C est comprise au sens large entre 4,0 et 7,7 % et de préférence entre 5,2 et 7, 7 %.

4. Adsorbants selon l'une des revendications 1 à 3, dont le diamètre moyen en nombre des cristaux est compris entre 0,1 et 1,7 µm, de préférence compris entre 0,1 et 1,6 µm.

5. Procédé d'obtention des adsorbants tels que définis dans l'une quelconque des revendications 1 à 4 comprenant les étapes suivantes :
- a/ agglomération de poudre de zéolite X de diamètre moyen en nombre inférieur ou égal à 1,7 µm, de rapport atomique Si/Al tel que 1,15 < Si/Al ≤ 1,5, de préférence tel que 1,2 < Si/Al ≤ 1,3, avec un liant contenant au moins 80 % en poids d'argile zéolitisable et éventuellement une source de silice, et mise en forme, puis séchage et calcination,
- b/ zéolitisation du liant par action d'une solution basique alcaline,
- c/ remplacement d'au moins 90 % des sites échangeables de la zéolite X par du baryum, suivi du lavage et du séchage du produit ainsi traité,
- d/ éventuellement remplacement d'au plus 33 % des sites échangeables de la zéolite X par du potassium, suivi du lavage et du séchage du produit ainsi traité,
- e/ activation,
- l'échange éventuel au potassium (étape d/) pouvant être pratiqué avant et/ou après l'échange au baryum et/ou simultanément (étape c/).

6. Procédé selon la revendication 5, **caractérisé en ce que** le diamètre moyen en nombre des cristaux est compris entre 0,1 et 1,7 µm, de préférence entre 0,1 et 1,6 µm.

7. Procédé selon l'une des revendications 5 ou 6, **caractérisé en ce que** l'activation de l'étape e/ est une activation thermique exécutée à une température de 200 à 300°C.

8. Procédé selon l'une des revendications 5 à 7, **caractérisé en ce que** la solution alcaline de l'étape b/ a une concentration d'au moins 0,5 M.

9. Procédé de récupération de paraxylène à partir de coupes d'isomères C8 aromatiques en phase liquide, par adsorption du paraxylène au moyen d'un adsorbant selon l'une quelconque des revendications 1 à 4 ou obtenu selon le procédé de l'une des revendications 5 à 8, en présence d'un désorbant.

10. Procédé de récupération de paraxylène selon la revendication 9 de type lit mobile simulé.

11. Procédé de récupération de paraxylène selon la revendication 10 de type contre-courant simulé.

12. Procédé de récupération de paraxylène selon la revendication 10 de type co-courant simulé.

13. Procédé de récupération de paraxylène à partir de coupes d'isomères C8 aromatiques en phase gazeuse, par adsorption du paraxylène au moyen d'un adsorbant selon l'une quelconque des revendications 1 à 4 ou obtenu selon le procédé de l'une des revendications 5 à 8, en présence d'un désorbant.

14. Procédé de récupération de paraxylène selon l'une quelconque des revendications 9 à 13 dans lequel le désorbant est le toluène ou le paradiéthylbenzène.

15. Procédé de séparation de sucres mettant en oeuvre un adsorbant selon l'une quelconque des revendications 1 à 4 ou obtenu selon le procédé de l'une des revendications 5 à 8.

16. Procédé de séparation d'alcools polyhydriques mettant en oeuvre un adsorbant selon l'une quelconque des revendications 1 à 4 ou obtenu selon le procédé de l'une des revendications 5 à 8.

17. Procédé de séparation d'isomères de toluène substitué tels que nitrotoluène, diéthyltoluène, toluènediamine, mettant en oeuvre un adsorbant selon l'une quelconque des revendications 1 à 4 ou obtenu selon le procédé de l'une des revendications 5 à 8.

18. Procédé de séparation des crésols mettant en oeuvre un adsorbant selon l'une quelconque des revendications 1 à 4 ou obtenu selon le procédé de l'une des revendications 5 à 8.

## Patentansprüche

1. Agglomerierte zeolithische Adsorptionsmittel auf Basis von Kristallen von Zeolith X mit einem zahlenmittleren Durchmesser kleiner oder gleich 1,7 µm, einem solchen Si/Al-Atomverhältnis, dass 1,15 < Si/Al ≤ 1,5 und vorzugsweise 1,2 < Si/Al ≤ 1,3, wobei mindestens 90% der austauschbaren kationischen Zentren des Zeoliths X entweder durch Bariumionen alleine oder durch Bariumionen und Kaliumionen besetzt sind, wobei die durch Kalium besetzten austauschbaren Stellen bis zu 1/3 der durch Bariumionen und Kaliumionen besetzten austauschbaren Stellen ausmachen können, und wobei der eventuelle Rest durch Ionen von anderen Alkali- oder Erdalkalimetallen als Barium und Kalium bereitgestellt wird, und inertem Bindemittel, **dadurch gekennzeichnet, dass** das durch Stickstoffadsorption bei 77 °K nach Entgasung unter Vakuum bei 300 °C über einen Zeitraum von 16 h gemessene Dubinin-Volumen der Adsorptionsmittel größer oder gleich 0,245 cm³/g, vorzugsweise größer oder gleich 0,250 cm³/g, noch weiter bevorzugt größer oder gleich 0,253 cm³/g ist und dass die nach der auf Agglomerate mit einer Größe von weniger als 1,6 mm angepasste Shell-Methode Serie SMS1471-74 gemessene mechanische Festigkeit größer oder gleich 2 MPa ist.

2. Adsorptionsmittel nach Anspruch 1, wobei der Gesamtgehalt des Austausches mit Barium alleine oder mit Barium + Kalium größer oder gleich 95 % ist.

3. Adsorptionsmittel nach Anspruch 1 oder 2, wobei der bei 900 °C gemessene Glühverlust in weitem Sinne zwischen 4,0 und 7,7 % und vorzugsweise zwischen 5,2 und 7,7 % liegt.

4. Adsorptionsmittel nach einem der Ansprüche 1 bis 3, wobei der zahlenmittlere Durchmesser der Kristalle zwischen 0,1 und 1,7 µm, vorzugsweise zwischen 0,1 und 1,6 µm, liegt.

5. Verfahren zum Erhalt von Adsorptionsmitteln gemäß einem der Ansprüche 1 bis 4 mit den folgenden Schritten:
- a/ Agglomerieren von Zeolith-X-Pulver mit einem zahlenmittleren Durchmesser kleiner oder gleich 1,7 µm und einem solchen Si/Al-Atomverhältnis, dass 1,15 < Si/Al ≤ 1,5 und vorzugsweise 1,2 < Si/Al ≤ 1,3, mit einem Bindemittel, das mindestens 80 Gew.-% zeolithisierbaren Ton und gegebenenfalls eine Siliciumdioxidquelle enthält, Formen, dann Trocknen und Calcinieren,
- b/ Zeolithisieren des Bindemittels durch Einwirkung einer alkalischen basischen Lösung,
- c/ Ersatz von mindestens 90% der austauschbaren Zentren des Zeoliths X durch Barium und dann Waschen und Trocknen des so behandelten Produkts,
- d/ gegebenenfalls Austausch von höchstens 33% der austauschbaren Zentren des Zeoliths X durch Kalium und dann Waschen und Trocknen des so behandelten Produkts,
- e/ Aktivierung,
- wobei der fakultative Kaliumaustausch (Schritt d/) vor oder nach dem Bariumaustausch (Schritt c/) durchgeführt werden kann.

6. Verfahren nach Anspruch 5, **dadurch gekennzeichnet, dass** der zahlenmittlere Durchmesser der Kristalle zwischen 0,1 und 1,7 µm, vorzugsweise zwischen 0,1 und 1,6 µm, liegt.

7. Verfahren nach Anspruch 5 oder 6, **dadurch gekennzeichnet, dass** es sich bei der Aktivierung von Schritt e/ um eine thermische Aktivierung handelt, die bei einer Temperatur von 200 bis 300°C durchgeführt wird.

8. Verfahren nach einem der Ansprüche 5 bis 7, **dadurch gekennzeichnet, dass** die alkalische Lösung von Schritt b/ eine Konzentration von mindestens 0,5 M aufweist.

9. Verfahren zur Gewinnung von para-Xylol aus aromatischen C8-Isomerenschnitten in der Flüssigphase durch Adsorption von para-Xylol mit Hilfe eines Adsorptionsmittels nach einem der Ansprüche 1 bis 4 oder eines nach dem Verfahren nach einem der Ansprüche 5 bis 8 erhaltenen Absorptionsmittels in Gegenwart eines Desorptionsmittels.

10. Verfahren zur Gewinnung von para-Xylol nach Anspruch 9 vom Typ simuliertes Fließbett.

11. Verfahren zur Gewinnung von para-Xylol nach Anspruch 10 vom Typ simulierter Gegenstrom.

12. Verfahren zur Gewinnung von para-Xylol nach Anspruch 10 vom Typ simulierter Gleichstrom.

13. Verfahren zur Gewinnung von para-Xylol aus aromatischen C8-Isomerenschnitten in der Gasphase durch Adsorption von para-Xylol mit Hilfe eines Adsorptionsmittels nach einem der Ansprüche 1 bis 4 oder eines nach dem Verfahren nach einem der Ansprüche 5 bis 8 erhaltenen Absorptionsmittels in Gegenwart eines Desorptionsmittels.

14. Verfahren zur Gewinnung von para-Xylol nach einem der Ansprüche 9 bis 13, bei dem es sich bei dem Desorptionsmittel um Toluol oder para-Diethylbenzol handelt.

15. Verfahren zur Trennung von Zuckern unter Verwendung eines Adsorptionsmittels nach einem der Ansprüche 1 bis 4 oder eines nach dem Verfahren nach einem der Ansprüche 5 bis 8 erhaltenen Absorptionsmittels.

16. Verfahren zur Trennung von mehrwertigen Alkoholen unter Verwendung eines Adsorptionsmittels nach einem der Ansprüche 1 bis 4 oder eines nach dem Verfahren nach einem der Ansprüche 5 bis 8 erhaltenen Absorptionsmittels.

17. Verfahren zur Trennung von Isomeren von substituiertem Toluol, wie Nitrotoluol, Diethyltoluol, Toluoldiamin, unter Verwendung eines Adsorptionsmittels nach einem der Ansprüche 1 bis 4 oder eines nach dem Verfahren nach einem der Ansprüche 5 bis 8 erhaltenen Absorptionsmittels.

18. Verfahren zur Trennung von Kresolen unter Verwendung eines Adsorptionsmittels nach einem der Ansprüche 1 bis 4 oder eines nach dem Verfahren nach einem der Ansprüche 5 bis 8 erhaltenen Absorptionsmittels.

## Claims

1. Agglomerated zeolitic adsorbents based on zeolite X crystals with a number-average diameter of 1.7 µm or less, an Si/Al atomic ratio such that 1.15 < Si/Al ≤ 1.5, preferably such that 1.2 < Si/Al ≤ 1.3, at least 90% of the exchangeable cationic sites of which are occupied either by barium ions alone or by barium ions and potassium ions, it being possible for the exchangeable sites occupied by potassium to represent up to 1/3 of the exchangeable sites occupied by the barium ions and the potassium ions, and the possible balance of which is provided by ions of alkali metals or alkaline-earth metals other than barium and potassium, and an inert binder, **characterized in that** the Dubinin volume of said adsorbents, measured by nitrogen adsorption at 77°K after vacuum degassing at 300°C for 16 h, is 0.245 cm³/g or higher, preferably 0.250 cm³/g or higher, more preferably 0.253 cm³/g or higher, and **in that** the mechanical strength, measured by the Shell Method Series SMS1471-74 adapted for agglomerates having a size of less than 1.6 mm, is 2 MPa or higher.

2. Adsorbents according to Claim 1, of which the overall global exchange with barium alone or with barium + potassium is 95% or higher.

3. Adsorbents according to either of Claims 1 and 2, the loss on ignition of which, measured at 900°C, is broadly between 4.0 and 7.7% and preferably between 5.2 and 7.7%.

4. Adsorbents according to one of Claims 1 to 3, the number-average diameter of the crystals of which is between 0.1 and 1.7 µm, preferably between 0.1 and 1.6 µm.

5. Process for obtaining adsorbents as defined in any one of Claims 1 to 4, comprising the following steps:
- a) agglomeration of zeolite X powder with a number-average diameter of 1.7 µm or less, having an Si/Al atomic ratio such that 1.15 < Si/Al ≤ 1.5, preferably such that 1.2 < Si/Al ≤ 1.3, with a binder containing at least 80% by weight of zeolitizable clay and optionally a source of silica, forming, then drying and calcination;
- b) zeolitization of the binder by the action of an alkaline basic solution;
- c) replacement of at least 90% of the exchangeable sites of the zeolite X with barium, followed by washing and drying of the product thus treated;
- d) optional replacement of at most 33% of the exchangeable sites of the zeolite X with potassium, followed by washing and drying of the product thus treated; and
- e) activation,
- it being possible for the optional potassium exchange (step d)) to be carried out before and/or after the barium exchange and/or simultaneously (step c)).

6. Process according to Claim 5, **characterized in that** the number-average diameter of the crystals is between 0.1 and 1.7 µm, preferably between 0.1 and 1.6 µm.

7. Process according to either of Claims 5 and 6, **characterized in that** the activation of step e) is a thermal activation carried out at a temperature of 200 to 300°C.

8. Process according to one of Claims 5 to 7, **characterized in that** the alkaline solution of step b) has a concentration of at least 0.5M.

9. Method of recovering para-xylene from aromatic C₈ isomer fractions in liquid phase, by adsorbing the para-xylene by means of an adsorbent according to any one of Claims 1 to 4 or obtained according to the process of one of Claims 5 to 8, in the presence of a desorbent.

10. Method of recovering para-xylene according to Claim 9, of the simulated moving bed type.

11. Method of recovering para-xylene according to Claim 10, of the simulated counter-current type.

12. Method of recovering *para*-xylene according to Claim 10, of the simulated co-current type.

13. Method of recovering para-xylene from aromatic C₈ isomer fractions in the gas phase, by adsorbing para-xylene by means of an adsorbent according to any one of Claims 1 to 4 or obtained according to the process of one of Claims 5 to 8, in the presence of a desorbent.

14. Method of recovering *para*-xylene according to any one of Claims 9 to 13, in which the desorbent is toluene or para-diethylbenzene.

15. Method of separating sugars, employing an adsorbent according to any one of Claims 1 to 4 or obtained according to the process of one of Claims 5 to 8.

16. Method of separating polyhydric alcohols, employing an adsorbent according to any one of Claims 1 to 4 or obtained according to the process of one of Claims 5 to 8.

17. Method of separating substituted toluene isomers, such as nitrotoluene, diethyltoluene, toluenediamine, employing an adsorbent according to any one of Claims 1 to 4 or obtained according to the process of one of Claims 5 to 8.

18. Method of separating cresols, employing an adsorbent according to any one of Claims 1 to 4 or obtained according to the process of one of Claims 5 to 8.
